# EUROPÄISCHE PATENTSCHRIFT

(11) **EP 1 642 088 B1**
(45) Veröffentlichungstag und Bekanntmachung des Hinweises auf die Patenterteilung: **02.05.2007**
(21) Anmeldenummer: 04741718.3
(22) Anmeldetag: 03.06.2004
(51) Int. Cl.: G01C 19/56

(54) **VERFAHREN ZUM ABGLEICH EINES DREHRATENSENSORS**
METHOD FOR ALIGNING A ROTATION RATE SENSOR
PROCEDE POUR AJUSTER UN CAPTEUR DE VITESSE DE ROTATION

(30) Priorität: 04.07.2003 DE 10330399
(43) Veröffentlichungstag der Anmeldung: 05.04.2006
(73) Patentinhaber: SIEMENS AKTIENGESELLSCHAFT, 80333 München (DE)
(72) Erfinder: BETZ, Uwe, 61184 Karben (DE); KRETTLER, Georg, 65824 Schwalbach (DE); MORELL, Heinz-Werner, 67659 Kaiserslautern (DE)
(86) Internationale Anmeldenummer: PCT/EP2004/051005
(87) Internationale Veröffentlichungsnummer: WO 2005/003684

(56) Entgegenhaltungen:
- EP-A- 0 642 216
- WO-A-96/04525
- WO-A-03/014669

## Beschreibung

Die Erfindung betrifft ein Verfahren zum Abgleich eines Drehratensensors mit einem Vibrationskreisel, der mit einem ersten Eingang und einem ersten Ausgang Teil eines primären Regelkreises ist, der den Vibrationskreisel durch Zuführung eines Erregersignals zum ersten Eingang mit seiner Eigenfrequenz erregt, wobei der Vibrationskreisel ferner mit einem zweiten Eingang und mit einem zweiten Ausgang Teil eines sekundären Regelkreises ist, wobei dem zweiten Ausgang ein Ausgangssignal entnehmbar ist, das nach Verstärkung und Analog/Digital-Wandlung in eine Inphase-Komponente und eine Quadratur-Komponente demoduliert wird, wobei die Komponenten nach Filterung wieder moduliert und zu einem Treibersignal zusammengesetzt werden, das dem zweiten Eingang zugeführt wird, und wobei aus der Inphase-Komponente ein Drehratensignal abgeleitet wird.

Bei Drehratensensoren mit einem Vibrationskreisel, die unter Durchführung der eingangs genannten Maßnahmen betrieben werden, geht nicht nur die von der Corioliskraft bewirkte Veränderung des Ausgangssignals in das Drehratensignal ein, sondern auch eine ungewollte Phasenverschiebung, die durch Laufzeiten der den mindestens einen Regelkreis bildenden Komponenten bedingt ist.

EP-A-0 642 216 offenbart eine Schaltung für einen Drehratensensor zur Korrektur der Inphase-und Quadraturkomponenten. Das Eingangsignal wird gefiltert und daraus ein Inphase- und ein Quadraturphasenreferenzsignal gebildet. Das ermittelte Drehtratensignal sollte im Inphasekanal auftreten, aufgrund eines Phasenversatzes erscheint jedoch ein Teil des Drehratensignals (Inphase-Komponente) auch im Quadraturkanal. Dieser Fehler wird durch Ermittlung und Speicherung eines Kompensationswinkels in einem Kalibrierverfahren behoben bzw. reduziert. Der Kompensationswinkel wird dann während des Betriebs aus dem Speicher gelesen und mit der Inphase-und Quadraturreferenz multipliziert.

Aufgabe der vorliegenden Erfindung ist es, diese Einflüsse auf das Drehratensignal weitgehend zu verhindern.

Diese Aufgabe wird erfindungsgemäß dadurch gelöst, dass bei unbewegtem Vibrationskreisel der Inphase-Komponenten und der

Quadratur-Komponenten Korrekturwerte hinzugefügt werden, die solange verändert werden, bis die Inphase-Komponente und die Quadratur-Komponente jeweils ein Minimum aufweisen und dass diese Korrekturwerte in einem nichtflüchtigen Speicher abgelegt und beim Betrieb des Drehratensensors angewendet werden.

Das erfindungsgemäße Verfahren wird vorzugsweise innerhalb eines Endabgleichs im Rahmen der Herstellung des Drehratensensors durchgeführt. Der nichtflüchtige Speicher dient dabei noch weiteren Korrektur- und Initialisierungsgrößen und braucht daher nicht allein für das erfindungsgemäße Verfahren vorgesehen zu sein.

Die Erfindung lässt zahlreiche Ausführungsformen zu. Eine davon ist schematisch in der Zeichnung anhand mehrerer Figuren dargestellt und nachfolgend beschrieben. Es zeigt:
- Fig. 1:: ein Blockschaltbild eines Drehratensensors und
- Fig. 2:: eine detailliertere Darstellung eines sekundären Regelkreises im Drehratensensor.

Das Ausführungsbeispiel sowie Teile davon sind zwar als Blockschaltbilder dargestellt. Dieses bedeutet jedoch nicht, dass die erfindungsgemäße Anordnung auf eine Realisierung mit Hilfe von einzelnen den Blöcken entsprechenden Schaltungen beschränkt ist. Die erfindungsgemäße Anordnung ist vielmehr in besonders vorteilhafter Weise mit Hilfe von hochintegrierten Schaltungen realisierbar. Dabei können Mikroprozessoren eingesetzt werden, welche bei geeigneter Programmierung die in den Blockschaltbildern dargestellten Verarbeitungsschritte durchführen.

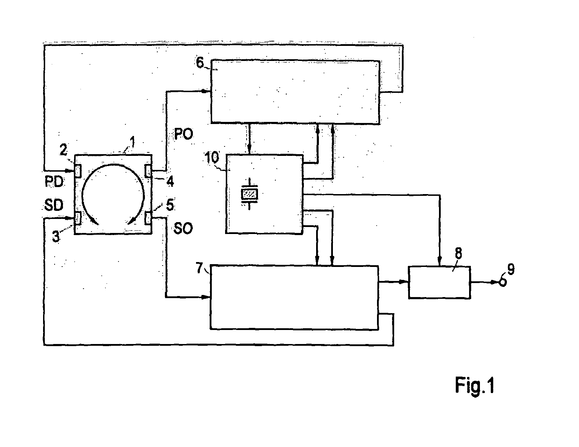

Fig. 1 zeigt ein Blockschaltbild einer Anordnung mit einem Vibrationskreisel 1 mit zwei Eingängen 2, 3 für ein primäres Erregersignal PD und ein sekundäres Erregersignal SD. Die Erregung erfolgt durch geeignete Wandler, beispielsweise elektromagnetische. Der Vibrationskreisel weist ferner zwei Ausgänge 4, 5 für ein primäres Ausgangssignal PO und ein sekundäres Ausgangssignal SO auf. Diese Signale geben die jeweilige Vibration an räumlich versetzten Stellen des Kreisels wieder. Derartige Kreisel sind beispielsweise aus EP 0 307 321 A1 bekannt und beruhen auf der Wirkung der Corioliskraft.

Der Vibrationskreisel 1 stellt ein Filter hoher Güte dar, wobei die Strecke zwischen dem Eingang 2 und dem Ausgang 4 Teil eines primären Regelkreises 6 und die Strecke zwischen dem Eingang 3 und dem Ausgang 5 Teil eines sekundären Regelkreises 7 ist. Der primäre Regelkreis 6 dient zur Anregung von Schwingungen mit der Resonanzfrequenz des Vibrationskreisels von beispielsweise 14 kHz. Die Anregung erfolgt dabei in einer Achse des Vibrationskreisels, zu welcher die für den sekundären Regelkreis benutzte Schwingungsrichtung um 90° versetzt ist. Im sekundären Regelkreis 7 wird das Signal SO in zwei Quadratur-Komponenten aufgespalten, von denen eine über ein Filter 8 einem Ausgang 9 zugeleitet wird, von welchem ein der Drehrate proportionales Signal abnehmbar ist.

In beiden Regelkreisen 6, 7 erfolgt ein wesentlicher Teil der Signalverarbeitung digital. Die zur Signalverarbeitung erforderlichen Taktsignale werden in einem quarzgesteuerten digitalen Frequenz-Synthesizer 10 erzeugt, dessen Taktfrequenz im dargestellten Beispiel 14,5 MHz beträgt. Von einer Erläuterung des primären Regelkreises wird abgesehen, da diese zum Verständnis des Ausführungsbeispiels nicht erforderlich ist.

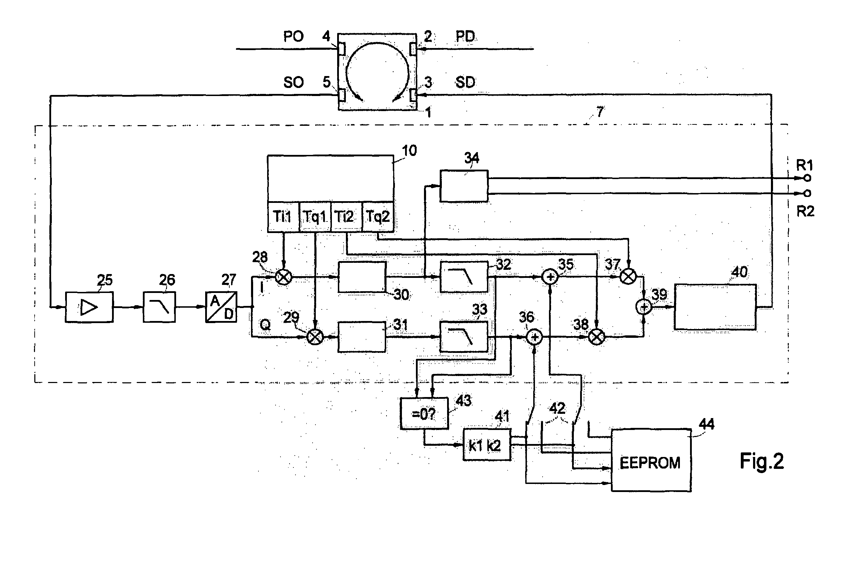

Der sekundäre Regelkreis 7 ist in Fig. 2 als Blockschaltbild dargestellt und enthält einen Verstärker 25, ein Anti-Alias-Filter 26 und einen Analog/Digital-Wandler 27. Mit Hilfe von Multiplizierern 28, 29, denen das verstärkte und digitalisierte Signal SO mit den noch nicht getrennten Komponenten I und Q und Träger Ti1 und Tq1 zugeführt werden, erfolgt eine Aufspaltung in Realteil und Imaginärteil.

Beide Komponenten durchlaufen anschließend je ein (sinx/x)-Filter 30, 31 und ein Tiefpassfilter 32, 33. Aus dem gefilterten Realteil werden mit Hilfe einer Aufbereitungsschaltung 34 zwei Signale R1 und R2 abgeleitet, welche die mit dem Drehratensensor zu messende Drehrate darstellen. Die Signale R1 und R2 unterscheiden sich dadurch, dass das Signal R2 nicht den gesamten durch die verwendete Schaltungstechnik möglichen Amplitudenbereich von beispielsweise 0V bis +5V einnimmt. Zur Ausgabe einer Fehlermeldung wird das Signal R2 auf Null gelegt, was das angeschlossene System als Fehlermeldung erkennt.

Den Tiefpassfiltern 32, 33 ist je ein Addierer 35, 36 nachgeschaltet. Anschließend erfolgt mit Hilfe von Multiplizierern 37, 38 eine Remodulation beider Komponenten Si bzw. Sq mit Trägern Ti2 und Tq2. Eine Addition bei 39 ergibt wieder eine 14-kHz-Schwingung, die in einem Ausgangstreiber 40 in einen zur Anregung des Vibrationskreisels 1 geeigneten Strom umgewandelt wird.

Durch eine im Einzelnen nicht dargestellte Steuerung des Frequenz-Synthesizers 10 erfolgt die Modulation bei 28 mit einer Phasenlage i und die Demodulation bei 29 mit einer Phasenlage q. Damit wird bewirkt, dass bei 28 eine Inphase-Komponente I und bei 29 eine Quadratur-Komponente Q demoduliert werden.

Durch Streuungen der Laufzeiten in den verschiedenen beteiligten Schaltungen ergibt sich jedoch eine Verfälschung der Inphase-Komponente und der Quadratur-Komponente. Somit wird das Messergebnis, d.h. das Drehratensignal, verfälscht.

Um dies zu vermeiden, werden bei einem Abgleich über die Addierer 35, 36 in einer Einrichtung 41 erzeugte Korrekturgrößen k1 und k2 den gefilterten Komponenten hinzuaddiert, wobei die Korrekturwerte k1 und k2 derart gewählt sind, dass sie eine Phasendrehung des Erregersignals SD und damit auch des Ausgangssignals SO bewirken. Die Umschalter 42 befinden sich dann in der gezeichneten Stellung. Während des Abgleichs werden vorgegebene Wertebereiche der Korrekturwerte k1, k2 durchfahren. Gleichzeitig wird in einer Einrichtung 43 geprüft, ob die Inphase-Komponente und die Quadratur-Komponente jeweils Null sind bzw. ein Minimum einnehmen. Ist dies der Fall, werden die dann in der Einrichtung 41 erzeugten Korrekturwerte k1, k2 in einem EEPROM 44 abgelegt. Bei dem normalen Betrieb sind die Umschalter 42 in der rechten Stellung und die beim Abgleich ermittelten Korrekturwerte werden aus dem EEPROM 44 ausgelesen und den Addierern 35, 36 zugeführt.

## Patentansprüche

1. Verfahren zum Abgleich eines Drehratensensors mit einem Vibrationskreisel (1),
- der mit einem ersten Eingang (2) und einem ersten Ausgang (4) Teil eines primären Regelkreises (6) ist, der den Vibrationskreisel (1) durch Zuführung eines Erregersignals (PD) zum ersten Eingang (2) mit seiner Eigenfrequenz erregt,
- wobei de Vibrationskreisel (1) ferner mit einem zweiten Eingang (3) und mit einem zweiten Ausgang (5) Teil eines sekundären Regelkreises (7) ist,
- wobei dem zweiten Ausgang (5) ein Ausgangssignal (S0) entnehmbar ist, das nach Verstärkung (25) und Analog/Digital-Wandlung (26) in eine Inphase-Komponente (I) und eine Quadratur-Komponente (Q) demoduliert wird,
- wobei die Komponenten nach Filterung (30,31,32,33) wieder moduliert (37,38) und zu einem Treibersignal (SD) zusammengesetzt werden, das dem zweiten Eingang (3) zugeführt wird, und
- wobei aus der Inphase-Komponente (I) ein Drehratensignal (R1,R2) abgeleitet wird,
**dadurch gekennzeichnet,**
- **dass** bei unbewegtem Vibrationskreisel (1) der Inphase-Komponente (I) und der Quadratur-Komponente (Q) Korrekturwerte (K1,K2) hinzugefügt werden, die solange verändert werden, bis die Inphase-Komponente (I) und die Quadratur-Komponente (Q) jeweils ein Minimum aufweisen und
- **dass** diese Korrekturwerte (K1,K2) in einem nichtflüchtigen Speicher (44) abgelegt und beim Betrieb des Drehratensensors angewendet werden.

## Claims

1. Method for adjustment of a rotation rate sensor having a vibration gyro (1)
- which, with a first input (2) and a first output (4), is part of a primary control loop (6) which excites the vibration gyro (1) by supplying an excitation signal (PD) to the first input (2) at its natural frequency,
- in which case the vibration gyro (1), with a second input (3) and with a second output (5), is also part of a secondary control loop (7),
- in which case an output signal (S0) can be tapped off from the second output (5) and, after amplification (25) and analogue/digital conversion (26), is demodulated to form an in-phase component (I) and a quadrature component (Q),
- in which case the components are modulated (37, 38) again after filtering (30, 31, 32, 33) and are combined to form a driver signal (SD) which is supplied to the second input (3), and
- in which case a rotation rate signal (R1, R2) is derived from the in-phase component,
**characterized**
- **in that**, when the vibration gyro (1) is not moving, correction values (K1, K2) are added to the in-phase components (I) and to the quadrature components (Q) and are varied until the in-phase components (I) and the quadrature components (Q) are each at a minimum, and
- **in that** these correction values (K1, K2) are stored in a non-volatile memory (44) and are used during operation of the rotation rate sensor.

## Revendications

1. Procédé permettant de calibrer un capteur de taux de rotation à gyroscope à vibrations (1)
- qui fait partie, par une première entrée (2) et une première sortie (4), d'un circuit primaire (6) de régulation qui excite le gyroscope à vibrations (1) avec sa fréquence propre en appliquant un signal d'excitation (PD) à la première entrée (2),
- alors que le gyroscope à vibrations (1) fait, en outre, partie, par une deuxième entrée (3) et une deuxième sortie (5), d'un circuit secondaire (7) de régulation,
- un signal de sortie (SO) pouvant être prélevé à la deuxième sortie (5) et étant, après amplification (25) et conversion analogique / numérique (26), démodulé en une composante en phase (I) et une composante déphasée en quadrature (Q),
- les composantes étant remodulées (37, 38) après filtrage (30, 31, 32, 33) et assemblées pour former un signal pilote (SD) qui est appliqué à la deuxième entrée (3) et
- un signal de taux de rotation (R1, R2) étant déduit de la composante en phase (I),
**caractérisé par le fait**
- **que**, lorsque le gyroscope à vibrations (1) est immobile, sont ajoutées à la composante en phase (I) et à la composante déphasée en quadrature (Q) des valeurs de correction (K1, K2) qui sont modifiées jusqu'à ce que la composante en phase (I) et la composante déphasée en quadrature (Q) aient chacune un minimum et
- **que** ces valeurs de correction (K1, K2) sont stockées dans une mémoire non volatile (44) et utilisées pendant le fonctionnement du capteur de taux de rotation.
